# EUROPÄISCHE PATENTANMELDUNG

(11) **EP 4 242 344 A1**
(43) Veröffentlichungstag der Anmeldung: **13.09.2023**
(21) Anmeldenummer: 22161291.4
(22) Anmeldetag: 10.03.2022
(51) Int. Cl.: C23C 24/04, F16B 2/00

(54) **KERAMIKBESCHICHTETE METALLFOLIE ALS REIBUNGSERHÖHENDES ELEMENT FÜR KRAFTSCHLÜSSIGEN VERBINDUNGSELEMENTEN**

(71) Anmelder: Heraeus Deutschland GmbH & Co. KG, 63450 Hanau (DE)
(72) Erfinder: Niewolak, Leszek, 63450 Hanau (DE); Stöcker, Thomas, 63450 Hanau (DE); Luck, Ilka Verena, 63450 Hanau (DE); Löffert, Mike, 63450 Hanau (DE)

(57) **Zusammenfassung**

Verbindungselement zur Erhöhung der Reibkraft in kraftschlüssigen Verbindungen, umfassend ein Metallsubstrat mit zwei gegenüberliegenden ebenen Oberflächen, wobei mindestens eine der Oberflächen eine Keramikschicht aufweist, wobei die Keramikschicht vorzugsweise mittels Aerosoldeposition aufgebracht wurde. Das Verbindungselement ist vorzugsweise frei von Phosphor und enthält keine Diamanten.

## Beschreibung

Kraftschlüssige Verbindungen finden im Maschinen-, Anlagen- und Kraftfahrzeugbau sowie der Energieerzeugung zur Übertragung von Kräften oder Drehmomenten Anwendung. Die Größe der jeweils übertragbaren Kraft hängt neben der bautechnischen Ausführung vor allem vom Haftreibungskoeffizient der miteinander verbundenen Bauteilflächen ab. Daher versucht man, bei solchen kraftschlüssigen Verbindungen die Reibung zu erhöhen und so eine möglichst sichere Übertragung von Querkräften und Drehmomenten zu ermöglichen. Solche Verbindungen können auch als Reibverbindungen bezeichnet werden.

Um die Reibkraft zwischen Verbindungspartnern zu erhöhen werden reibkraftverstärkende Verbindungselemente, auch Unterlegscheiben genannt, verwendet. Durch die Verwendung solcher reibkraftverstärkenden Unterlegscheiben können typischerweise 3-5 mal höhere Drehmomente oder Kräfte zuverlässig übertragen werden im Vergleich zu herkömmlichen Systemen. Diese reibkraftverstärkenden Unterlegscheiben werden heute typischer Weise hergestellt, indem eine dünne Stahlfolie mit einer Dicke im Bereich von 100 µm bis zu mehreren Millimetern mit einer Matrix aus Nickel und Phosphor beschichtet wird und in diese Matrix Mikrodiamanten eingelassen werden. Diese Vorgehensweise wird zum Beispiel beschrieben in EP3339658A1. Ein Nachteil solcher diamantbasierten Systeme ist, dass die Einsatztemperaturen auf etwa 400°C begrenzt sind, da es darüber zu Zersetzung kommen kann. Die mittlere Rauigkeit R_{z} der diamanthaltigen Schicht liegt üblicher Weise im Bereich von 5 µm - 30 µm. Das Gegenstück, das von der Unterlegscheibe kontaktiert wird, sollte zu der Rauigkeit passen, d.h. ähnliche R_{z} Werte aufweisen.

Eine Aufgabe der vorliegenden Erfindung bestand darin, ein reibkraftverstärkendes Verbindungselement, wie z. B. eine Unterlegscheibe, bereitzustellen, das eine verbesserte Temperaturbeständigkeit aufweist.

Weiterhin war es eine bevorzugte Aufgabe ein reibkraftverstärkendes Verbindungselement bereitzustellen, das keine gesundheitsschädlichen Substanzen aufweist.

Eine weitere bevorzugte Aufgabe bestand darin, ein reibkraftverstärkendes Verbindungselement bereitzustellen, das auf Diamanten verzichtet.

In einem ersten Aspekt der Erfindung wird die Aufgabe gelöst durch ein Verbindungselement zur Erhöhung der Reibkraft in kraftschlüssigen Verbindungen, umfassend ein Metallsubstrat mit zwei gegenüberliegenden ebenen Oberflächen, wobei eine oder beide Oberflächen eine Keramikschicht aufweisen.

Durch die Erfindung kann ein Verbindungselement bereitgestellt werden, das eine hohe thermische Beständigkeit aufweist, keine gesundheitsschädlichen Substanzen enthält und günstig herzustellen ist.

Das Verbindungselement kann bevorzugt eine Scheibe sein, insbesondere eine Scheibe mit einer Öffnung, auch Unterlegscheibe genannt. Optional kann die Scheibe einen runden Umriss oder jeden anderen beliebigen Umriss aufweisen.

Die kraftschlüssige Verbindung kann beispielsweise eine Schraubverbindung oder eine Klemmverbindung sein.

Das Metallsubstrat ist vorzugsweise flach und weist zwei gegenüberliegende Oberflächen auf. Anders ausgedrückt kann das Metallsubstrat als Scheibe verstanden werden. Die Oberflächen des Metallsubstrats sind bevorzugt eben. Besonders bevorzugt sind die gegenüberliegenden Oberflächen planparallel. Darüber hinaus bevorzugt ist das Metallsubstrat, dass vorzugsweise flach ist, in seiner Form nicht weiter beschränkt. Das Metallsubstrat kann beispielsweise ausgewählt sein aus einer Folie und einem Blech.

Optional kann das Metallsubstrat, das vorzugsweise flach ist, zusammenhängend ohne Öffnungen sein. Alternativ kann das Metallsubstrat, das vorzugsweise flach ist, eine oder mehrere Ausnehmungen, insbesondere Öffnungen, aufweisen. In einer Ausgestaltung kann das Metallsubstrat beispielsweise eine Ausnehmung in Form einer durchgehenden Öffnung aufweisen, z.B. eine Bohrung. In einer Ausführung kann die Öffnung zentrisch angeordnet sein. Zusätzlich kann das Metallsubstrat die Form eines geschlossenen oder offenen Kreises (d.h. eine O-Form oder eine C-Form) aufweisen.

Die mittlere Dicke des Metallsubstrats, insbesondere der Folie oder des Blechs, weist bevorzugt einen Wert von mindestens 50 µm, insbesondere von mindestens 100 µm auf. Weiterhin bevorzugt beträgt die mittlere Dicke des Metallsubstrats höchstens 10 mm, insbesondere höchstens 1 mm und ganz besonders bevorzugt höchstens 500 µm. Beispielsweise kann die mittlere Dicke im Bereich von 50 µm - 10 mm oder im Bereich von 100 µm - 1 mm liegen. Die mittlere Dicke des Metallsubstrats kann vorzugsweise senkrecht zu den planparallelen Oberflächen bestimmt werden. Vorzugsweise ist die Ausdehnung des Metallsubstrats senkrecht zur Richtung der mittleren Dicke des Metallsubstrats um mindestens einen Faktor 10 oder mindestens einen Faktor 50 höher als in Richtung der mittleren Dicke des Substrats.

Das Metallsubstrat weist ein Metall auf oder besteht daraus. Das Metall des Substrats kann ausgewählt sein aus reinen Metallen und Legierungen.

Bevorzugt ist das Metall eine Eisenbasislegierung, z.B. Stahl, oder eine Basislegierung basierend auf einem Element ausgewählt aus der Gruppe bestehend aus Kupfer, Aluminium, Magnesium und Titan. Optional kann der Stahl ausgewählt sein aus der Gruppe bestehend aus Werkzeugstahl und Edelstahl. Stahl kann als Eisen-Kohlenstoff-Legierung mit einem Kohlenstoffanteil von maximal 2 Gew.-% verstanden werden. Alternativ oder zusätzlich kann Stahl mindestens ein Element enthalten, das ausgewählt ist aus der Gruppe bestehend aus Bor, Phosphor, Silizium Nickel, Vanadium, Cobalt, Chrom, Molybdän, Mangan, Titan und Kupfer. Die Zugabe der vorgenannten Elemente kann zu einer Verbesserung der Eigenschaften, insbesondere der mechanischen Eigenschaften, von Stahl führen. Im Rahmen der Erfindung kann unter der Basis einer Basislegierung dasjenige Element verstanden werden, das den höchsten Gewichtsanteil in der Legierung aufweist. Zum Beispiel weist Eisen in Stahl, bezogen auf das Gewicht, den höchsten Anteil auf.

In einer möglichen Ausgestaltung weist das Metall des Metallsubstrats mindestens eine der folgenden Eigenschaften auf:
a. eine Zugfestigkeit im Bereich von mindestens 100 MPa, insbesondere mindestens 500 MPa,
b. ein E-Modul im Bereich 210.000 MPa - 246.000 MPa und
c. eine Vickers Härte HV10 von 70 oder mehr, insbesondere 200 oder mehr und ganz besonders bevorzugt 500 oder mehr.

Mindestens eine der Oberflächen, d.h. eine oder beide Oberflächen, weist eine Keramikschicht auf. Optional kann die Keramikschicht, die mindestens eine Oberfläche teilweise oder vollständig bedecken. Eine vollständige Bedeckung einer Oberfläche hat den Vorteil, dass Korrosion des Metallsubstrats verringert werden kann.

Optional können beide gegenüberliegenden Oberflächen des Metallsubstrats eine Keramikschicht aufweisen. Besonders bevorzugt sind die beiden gegenüberliegenden Oberflächen des Metallsubstrats jeweils vollständig mit einer Keramikschicht bedeckt. Weiterhin bevorzugt ist die Keramikschicht geschlossen und weist keine Öffnungen, Defekte oder ähnliches auf. Davon ausgenommen können Ausnehmung bzw. Öffnungen im Metallsubstrat sein.

In einer möglichen Ausführung kann die Keramikschicht ein Refraktärmetall aufweisen. Alternativ oder zusätzlich weist die Keramikschicht mindestens ein Element auf, das ausgewählt ist aus der Gruppe bestehend aus Bor, Aluminium, Silizium, Zirkonium, Titan, Molybdän, Wolfram, Vanadium und Hafnium. Es ist auch möglich, dass die Keramik der Keramikschicht mehrere der vorgenannten Elemente aufweist.

Die Keramik der Keramikschicht kann ausgewählt sein aus der Gruppe bestehend aus Oxidkeramiken, Carbidkeramiken, Nitridkeramiken und Silicidkeramiken sowie Mischungen dieser Keramiken.

Besonders bevorzugt kann die Keramikschicht eine Keramik aufweisen oder daraus bestehen, die ausgewählt ist aus der Gruppe enthaltend Aluminiumoxid, Zirkonoxid, Titanoxid, Siliziumoxid, Bornitrid, Siliziumnitrid, Aluminiumnitrid, Siliziumcarbid und Wolframcarbid.

Wenn die Keramikschicht eine Keramik aufweist, kann die Keramikschicht neben einer oder mehrerer Keramiken auch weitere Komponenten aufweisen. Die weitern Komponenten können beispielsweise ausgewählt sein aus der Gruppe enthaltend Y₂O₃-ZrO₂-Mischkristalle und Zirkonoxid - verstärkte Aluminiumoxidkeramik (ZTA). Alternativ kann die Keramikschicht Komposite aus mehrere Keramikmaterialen aufweisen. Beispielsweise kann eine vergleichsweise harte Nitrid- oder Carbidkeramik in eine Matrix aus einer Oxidkeramik, bspw. aus Aluminiumoxid oder Magnesiumoxid eingebettet sein. Vorteilhafter Weise kann durch die einbettende Matrix das Ausdehnungsverhalten der Keramikschicht angepasst werde.

Optional kann die Keramikschicht eine relative Dichte von 95% oder mehr, insbesondere von 98% oder mehr oder sogar 99% oder mehr aufweisen, bezogen auf die theoretisch erreichbare Dichte der massiven Keramik. Durch die hohe relative Dichte kann das Metallsubstrat vorzugsweise gut gegen Korrosion geschützt werden.

In einer besonders bevorzugten Ausführung der Erfindung wird die Keramikschicht mittels Aerosol-Deposition hergestellt, so wie es hierin beschrieben ist.

In einer vorteilhaften Ausführung der Erfindung weist die Keramikschicht eine Vickershärte (HV10) von mindestens 1400, insbesondere von mindestens 1600 auf.

Vorzugsweise weist die Rauigkeit R_{z} der Keramikschicht einen Wert von mindestens 2 µm, insbesondere von mindestens 5 µm auf. Weiterhin kann diese Rauigkeit R_{z} einen Wert von höchstens 40 µm, insbesondere von höchstens 20 µm aufweisen. Die Rauigkeit R_{z} kann im Rahmen der Erfindung mittels Tastschnittverfahren gemäß DIN EN ISO 4287:2010-07 gemessen werden.

In einer möglichen Ausgestaltung der Erfindung entspricht die Rauigkeit des Metallsubstrats im Wesentlichen der Rauigkeit der Keramikschicht. Zum Beispiel können die Rauigkeiten von dem Metallsubstrat und einer darauf angeordneten Keramikschicht Werte aufweisen, die nicht mehr als 200%, insbesondere nicht mehr als 100% und ganz besonders bevorzugt nicht mehr als 50% voneinander abweichen.

Die mittlere Dicke der Keramikschicht liegt bevorzugt im Bereich von 2 µm - 10 µm und insbesondere im Bereich von 2 µm - 8 µm, 3 µm - 10 µm, 3 µm - 8 µm oder 3 µm - 5 µm. Dadurch können besonders fest haftende, dichte Schichten bereitgestellt werden.

Besonders bevorzugt ist die Keramikschicht chemisch an das Metallsubstrat angebunden. Unter chemische Anbindung im Rahmen der vorliegenden Erfindung kann verstanden werden, dass zwischen den Grenzflächenatomen des Metallsubstrats und den Grenzflächenatomen der Keramikschicht eine kovalente oder ionische Bindung ausgebildet ist. Eine chemische Anbindung kann eine besonders feste Anbindung einer Keramikschicht an das Metallsubstrat bewirken.

Chemische Bindungen können insbesondere vorliegen zwischen Metallatomen des Metallsubstrats und Nichtmetall-Atomen, z.B. Sauerstoff, der Keramikschicht. Die kovalenten bzw. ionischen Bindungen können beispielsweise nachgewiesen werden mittels *Electron Energy-Loss Spectroscopy* (EELS) in einem Transmissions-Elektronenmikroskop (TEM).

Die Anwesenheit einer chemischen Anbindung kann in EELS-Spektren daran erkannt werden, dass die mittels EELS bestimmbaren Elektronenzustände der Elemente, insbesondere der Metallatome, wie z.B. Aluminium in Al₂O₃, in der Vollkeramik den Elektronenzuständen an der Grenzfläche der Keramikschicht entsprechen.

In einer bevorzugten Ausführung weist das Verbindungselement an der Grenzfläche zwischen Metallsubstrat und Keramikschicht keine dünne Zwischenschicht, insbesondere mit einer Dicke im Bereich von 1 nm - 100 nm, auf, die sauerstoffreich ist oder eine Legierung aufweist. Besonders bevorzugt sind mittels EELS keine Metalloxide eines Metalls des Metallsubstrats detektierbar. Zusätzlich oder alternativ kann in einer Ausführung der Erfindung mittels EELS detektiert werden, dass sich die Elektronenzustände der angrenzenden Nicht-Metallatome der Keramikschicht (O, N, C) gegenüber den Elektronenzuständen in der Bulk-Keramik verschieben, was eine chemische Bindung zwischen Metallatomen des Metallsubstrats und den Nicht-Metallatomen der Keramik anzeigt. Beispielsweise können chemische Bindungen zwischen terminalen Sauerstoffatomen aus einer Al₂O₃-Keramik und den Eisenatomen aus einem Stahlsubstrat vorliegen. Diese Änderung der Elektronenzustände der Nicht-Metallatome der Keramik können z.B. durch Verschiebung der jeweiligen K-Kante im EELS-Spektrum bestimmt werden.

Insbesondere kann es bevorzugt sein, wenn an der Grenzfläche zwischen Metallsubstrat und Keramikschicht keine Zwischenschicht, z.B. in Form einer Legierungsschicht und/oder einer Oxidschicht, vorliegt. Dies kann insbesondere erreicht werden, wenn die Keramikschicht mittels Aerosol-Deposition aufgetragen wird. Die Abwesenheit kann mittels EELS überprüft werden.

Im Gegensatz zur chemischen Anbindung im Rahmen der Erfindung erfolgt die Anbindung bei thermischen Spritzen vorzugsweise mittels mechanischen Verklammerns, durch Ausbildung einer sauerstoffreichen, oxidischen Zwischenschicht oder durch Ausbildung einer Legierungsschicht.

Vorzugsweise weist die Keramikschicht auf dem Metallsubstrat eine Haftfestigkeit von mindestens 20 MPa, insbesondere von mindestens 30 MPa auf. Beispielsweise kann die erreichbare Obergrenze für die Haftfestigkeit bei ca. 50 MPa liegen. Die Haftfestigkeit kann gemäß DIN EN ISO 4624:2016-08 bestimmt werden, mit einem zylindrischen Prüfstempel aus Stahl mit einem Durchmesser von 12 mm. Als Klebstoff wurde der Epoxidklebstoff Araldit 2011 von Huntsman verwendet.

Vorzugsweise enthält das Verbindungselement keinen absichtlich hinzugefügten Phosphor oder Phosphorverbindung und weiterhin ist das Verbindungselement optional frei von Diamanten.

In einer besonders bevorzugten Ausgestaltung der Erfindung umfasst das Verbindungselement zur Erhöhung der Reibkraft in kraftschlüssigen Verbindungen, ein Stahlsubstrat mit einer Dicke im Bereich von 50 µm - 500 µm mit zwei gegenüberliegenden ebenen Oberflächen, wobei eine oder beide Oberflächen eine Aluminiumoxidschicht aufweisen. Die Aluminiumoxidschicht ist vorzugsweise mittels Aerosol-Deposition bei Raumtemperatur aufgetragen, ist chemische an das Metallsubstrat gebunden und weist eine Rauigkeit R_{z} im Bereich von 2 µm - 40 µm auf.

In einem zweiten Aspekt betrifft die Erfindung ein Verfahren zur Herstellung eines Verbindungselements, insbesondere eines erfindungsgemäßen Verbindungselements, aufweisend die Schritte:
- Bereitstellen eines Metallsubstrats aufweisend zwei gegenüberliegende, insbesondere planparallele Oberflächen,
- optional, Einstellen der Oberflächenrauigkeit R_{z} des Metallsubstrats auf einen Wert im Bereich von 2 µm und 40 µm und
- Aufbringen mindestens einer Keramikschicht auf mindestens eine der Oberflächen des Metallsubstrats mittels Aerosol- Deposition bei Raumtemperatur unter Erhalt eines Verbindungselements.

In einer möglichen Ausführung kann das Verbindungselement nach dem Aufbringen der Keramikschicht einer Nachbearbeitung unterzogen werden. Das Nachbearbeiten kann beispielsweise ausgewählt sein aus Zuschneiden, Bohren, Fräsen, Stanzen, Tempern, Sintern oder Kombinationen dieser Verfahren

Das bereitgestellte Metallsubstrat weist vorzugsweise die Merkmale auf, die hierin beschrieben sind. Vorzugsweise weist die Rauigkeit R_{z} der Oberfläche des Metallsubstrats einen Wert von mindestens 2 µm, insbesondere von mindestens 5 µm auf. Weiterhin kann diese Rauigkeit R_{z} einen Wert von höchstens 80 µm, insbesondere von höchstens 40 µm, ganz besonders bevorzug von höchstens 20 µm aufweisen. Die Rauigkeit R_{z} kann im Rahmen der Erfindung mittels Tastschnittverfahren gemäß DIN EN ISO 4287:2010-07 gemessen werden. Für den Fall, dass das Metallsubstrat noch keine Oberflächenrauigkeit aufweist, die im bevorzugten Bereich liegt, kann optional die Oberflächenrauigkeit Rz des Metallsubstrats auf einen Wert in diesem Bereich eingestellt werden.

Das Einstellen der Rauigkeit kann beispielsweise erreicht werden mit einem Verfahren ausgewählt aus Schleifen, Polieren, Ätzen, Korundstrahlen, Laserablation, Strukturwalzen und Prägen. Weiterhin optional kann die Oberfläche weiter vorbehandelt werden mit einem Verfahren wie Entfetten oder Plasmaätzen. Dadurch kann eine besonders reine Oberfläche erhalten werden, auf der eine Keramikschicht besonders gut haftet, insbesondere durch Ausbildung einer chemischen Anbindung.

Nach dem Breitstellen des Metallsubstrats und optional nach dem Einstellen der Oberflächenrauigkeit wird auf mindestens eine der Oberflächen des Metallsubstrats eine Keramikschicht mittels Aerosol-Deposition aufgebracht. In einer möglichen Ausführung wird auf beiden Oberflächen eine Keramikschicht mittels Aerosol-Deposition aufgebracht.

Für die Abscheidung mittels Aerosol-Deposition wird eine Beschichtungsanlage verwendet. Diese Beschichtungsanlage enthält einen Aerosolerzeuger, in dem das verwendete Keramikpulver in ein Aerosol überführt wird. Zusätzlich enthält die Beschichtungsanlage eine Beschichtungskammer, in der der Beschichtungsvorgang erfolgt. In dem Aerosolgenerator herrscht insbesondere während des Prozesses ein Vakuum im bevorzugten Bereich von 60 mbar bis 1066 mbar. In der Beschichtungskammer herrscht insbesondere während des Prozesses ein Druck im bevorzugten Bereich von 0,2 mbar- 20 mbar. Dabei ist der Druck in der Beschichtungskammer kleiner als der Druck im Aerosolgenerator. Typischer Weise liegt die Druckdifferenz zwischen Aerosolgenerator und Beschichtungskammer im Bereich von 200 mbar - 500 mbar. Dieser Druck entspricht vorzugsweise dem Druck am Düseneingang. Über ein Prozessgas wird das Keramikpulver aus dem Aerosolerzeuger durch eine Düse in die Beschichtungskammer transportiert. Dabei werden die Partikel des Keramikpulvers aufgrund des resultierenden Druckunterschieds zwischen Aerosolgenerator und Beschichtungskammer beschleunigt, insbesondere auf eine Geschwindigkeit im Bereich von 100 m/s - 600 m/s, und auf die Oberfläche des Metallsubstrats geschleudert. Die Partikel des Keramikpulvers brechen durch den Aufprall in Bruchstücke, typischer Weise im Bereich von 1 nm - 200 nm, bevorzugt im Bereich von 20 nm - 100 nm, auf und bilden eine dichte und gut haftende Schicht auf dem Metallsubstrat. Besonders bevorzugt brechen im Wesentlichen alle Partikel des Keramikpulvers durch den Aufprall auf. Die erzeugte Schicht enthält somit typischer Weise keine ursprünglichen Partikel des Aerosols mehr, sondern nur noch Fragmente dieser Partikel.

Das Keramikpulver, das für die Aerosol-Deposition verwendet wird, weist beispielsweise vereinzelte Primärpartikel oder Agglomerate von Primärpartikeln, auch Sekundärpartikel genannt, auf. Die Primärpartikel weisen vorzugsweise eine Partikelgrößenverteilung mit einem d₅₀-Wert im Bereich von 0,1 µm - 10 µm, insbesondere im Bereich von 0,5 µm- 10 µm auf. Die optional vorliegenden Sekundärpartikel weisen vorzugsweise eine Partikelgrößenverteilung mit einem dso-Wert im Bereich von 0,5 µm - 150 µm, insbesondere im Bereich von 0,5 µm-100 µm und ganz besonders bevorzugt im Bereich von 0,5 - 50 µm auf. Keramikpulver mit einer derartigen Partikelgrößenverteilung sind besonders gut geeignet zur Herstellung dichter, reibkraftverstärkender Schichten mittels Aerosol-Deposition. Weiterhin kann die Partikelgrößenverteilung der Primärpartikel oder der Sekundärpartikel, einen d₉₀-Wert von 125 µm oder weniger, insbesondere von 50 µm oder weniger aufweisen. Die Partikelgrößenverteilungen im Rahmen der Erfindung können beispielsweise bestimmt werden mittels Laserbeugung gemäß ISO 13320:2009. Das Pulver kann optional eine monomodale oder eine multimodale Partikelgrößenverteilung aufweisen.

Das verwendete Prozessgas für die Aerosol-Deposition kann ausgewählt sein aus Inertgasen, Sauerstoff, Luft oder Kombinationen daraus. Das Inertgas kann bevorzugt mindestens ein Gas sein, das ausgewählt ist aus der Gruppe bestehend aus Helium (He), Argon (Ar) und Stickstoff (N₂) oder Kombinationen daraus.

Das zu beschichtende Metallsubstrat wird vorzugsweise mit einem XY-Tisch bewegt. Alternativ oder zusätzlich ist es möglich, dass eine Düse über das zu beschichtende Metallsubstrat bewegt wird. Auch eine Kombination von beiden Vorgehensweisen, also einer Bewegung des Tischs und einer Düse in XY-Richtung gegeneinander ist möglich.

Bei der Aerosol-Deposition handelt es sich um ein kaltes Beschichtungsverfahren. Vorzugsweise liegt die Temperatur des Trägergases und/oder des Substrats während der Aerosol-Deposition bei Raumtemperatur. Unter Raumtemperatur im Rahmen der Erfindung können Temperaturen zwischen 0°C und 50°C, insbesondere zwischen 10°C und 30°C verstanden werden.

In einem dritten Aspekt betrifft die Erfindung eine Vorrichtung aufweisend eine kraftschlüssige Verbindung zwischen zwei Bauteilen, wobei zwischen den zwei miteinander verbundenen Bauteilen zumindest teilweise ein erfindungsgemäßes Verbindungselement angeordnet ist.

In einer bevorzugten Ausführung stehen die Flächen der Bauteile, die mit dem erfindungsgemäßen Verbindungselement in Kontakt stehen, planparallel zueinander.

Das Material mindestens eines der zu verbindenden Bauteile oder bevorzugt beider zu verbindenden Bauteile kann beispielsweise Metall enthalten oder aus Metall bestehen. Vorzugsweise ist das Metall ein Stahl.

Die Vorrichtung kann bevorzugt ausgewählt sein aus der Gruppe bestehend aus Kurbelwellen, Nockenwellen, Flanschen, Schwungrädern, Ausgleichswellenmodulen und Antriebssträngen, z.B. eines Windkraftgetriebes.

Das Verbindungselement enthalten in der Vorrichtung kann vorzugsweise über einen Mikroformschluss mit mindestens einem der zwei Bauteile verbunden sein. Unter Mikroformschluss kann verstanden werden, dass sich die Oberflächen mindestens eines zu verbindenden Bauteils auf der Mikrometerebene formschlüssig an die Oberfläche des Verbindungselements anpasst, z.B. durch Verformung.

Besonders bevorzugt weist mindestens eines der Bauteile an der Kontaktoberfläche mit dem Verbindungselement eine Oberflächenrauigkeit R_{z} einen Wert von mindestens 1 µm, insbesondere von mindestens 5 µm aufweist und wobei diese Rauigkeit R_{z} einen Wert von höchstens 60 µm, insbesondere von höchstens 40 µm und ganz besonders bevorzugt von höchstens 20 µm, aufweist.

In einer möglichen Ausgestaltung der Erfindung unterscheiden sich die Oberflächenrauigkeiten mindestens einer Oberfläche eines Bauteils und die Oberflächenrauigkeit des Verbindungselements um höchstens 200 %, insbesondere um höchstens 100% oder ganz besonders bevorzugt um höchstens 50%. Dadurch können vorteilhafte Reibwerte erzielt werden.

Um den Reibungskoeffizienten weiter zu erhöhen, kann es vorteilhaft sein, wenn zusätzlich die Kontaktfläche mindestens eines Bauteils eine Keramikschicht aufweist, insbesondere eine Keramikschicht mit einer Rauigkeit R_{z}, die im Bereich der Keramikschicht des Verbindungselements liegt (+/- 100%). Diese Keramikschicht auf der Kontaktfläche mindestens eines Bauteils kann beispielsweise mittels Aerosol-Deposition aufgetragen werden. Alternativ können auch andere Beschichtungsverfahren verwendet werden, um eine Keramikschicht auf die Kontaktfläche mindestens eines Bauteils aufzutragen.

Besonders bevorzugt ist die Vorrichtung so ausgestaltet, dass das Verbindungselement ohne Funktionsverlust Temperaturen zwischen 400°C und 800°C standhält.

### Beschreibung der Messmethoden

### Partikelgrößenverteilung

Die Partikelgrößenverteilung kann durch Laserbeugung gemäß ISO 13320:2009 mit dem Gerät "Helos BR/R3" (Sympatec GmbH, Deutschland) bestimmt werden. Der Messbereich beträgt dabei in Abhängigkeit von den im Pulver vorliegenden Partikelgrößen 0,9 - 175 µm oder 4,5 - 875 µm. Für die Dispergierung der Pulverpartikel kann das Trockendispergiersystem RODODS/M (Sympatec GmbH, Deutschland) mit Schwingrinnendosierer VIBRI (mit VenturiDüse) verwendete werden. Die Probenmenge beträgt dabei 5 g. Die Wellenlänge der verwendeten Laserstrahlung beträgt 632,8 nm. Die Auswertung kann mit Hilfe der Mie-Theorie erfolgen. Die Partikelgrößen werden als Volumenverteilung erhalten, d.h. im Rahmen der vorliegenden Erfindung wird die Partikelgrößenverteilung in Form einer Volumenverteilungssummenkurve bestimmt. Aus der durch Laserbeugung gemessenen Partikelgrößenverteilung (Volumenverteilung) können, wie in der ISO 9276-2:2014 beschrieben, die d₅₀ - und d₉₀ - Werte berechnet werden.

### Chemische Bindung

Die chemischen Bindungszustände der Atome in der Nähe der Grenzfläche zwischen der Keramikschicht und dem Metallsubstrat wurden mittels EELS (GIF Tridiem, GATAN, Inc.) an dünnen Schliffen untersucht. Die Messungen wurden mit einer Energieauflösung von 1,0 eV (FWHM) an einem TEM (JEM-2100F, JEOL Ltd) bei einer Beschleunigungsspannung von 200 kV durchgeführt. Der Durchmesser des Elektronenstrahls betrug 0,7 nm. EELS Spektren (ELNES) in der Nähe der L-Kante der Metalle bzw. der jeweiligen K-Kante der Nichtmetalle der Keramik (des Sauerstoffs der Oxidkeramik bzw. des Stickstoffs der Nitridkeramik oder des Kohlenstoffs der Carbidkeramik) wurden aufgenommen. Die Aufnahmezeiten betrugen z.B. 0,8s oder. 2,5 s.

### Zugfestigkeit

Die Zugfestigkeit kann vorzugsweise mit eine Zugprüfmaschine der Firma Zwick Roell GmbH & Co. KG (Deutschland) mit einem uniaxiale Zugversuch gemäß DIN EN ISO 6892-1:2020-06 bei Raumtemperatur bestimmt werden.

### E-Modul

Das Elastizitätsmodul (E-Modul) kann vorzugsweise mit eine Zugprüfmaschine der Firma Zwick Roell GmbH & Co. KG (Deutschland) mit einem uniaxiale Zugversuch gemäß DIN EN ISO 6892-1:2020-06 bei Raumtemperatur bestimmt werden.

### Härte

Im Kontext der Erfindung kann die Härte nach Vickers (HV10) mit einem ZHV30 Kleinlast-Vickers Härteprüfgerät der Firma Zwick Roell GmbH & Co. KG (Deutschland) gemäß DIN EN ISO 6507-1:2018-07 bestimmt werden.

### Bezugszeichenliste

1 Vorrichtung
10 Verbindungselement
11 Metallsubstrat
12, 12' Keramikschicht
13 Oberfläche der Keramikschicht
14 Öffnung
20, 20' Bauteil
21 Kontaktfläche des Bauteils

### Beschreibung der Abbildung

Figur 1 zeigt ein Beispiel für ein erfindungsgemäßes Verbindungselement.

Figur 2 zeigt eine schematische Explosionszeichnung einer Vorrichtung aufweisend eine kraftschlüssige Verbindung zwischen zwei Bauteilen.

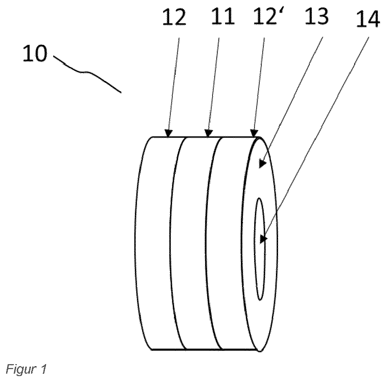

In Figur 1 ist ein Verbindungselement (10) dargestellt. Das Verbindungselement hat die Form einer Scheibe mit einer Öffnung (14). Auf den beiden gegenüberliegenden Oberflächen des Metallsubstrats (11) sind Keramikschichten (12, 12') angeordnet. Die Keramikschichten (12, 12') können mittels Aerosol-Deposition hergestellt sein. Die Oberfläche der Keramikschicht (13) kann eine Rauigkeit R_{z} im Bereich von 2 µm bis 40 µm aufweisen.

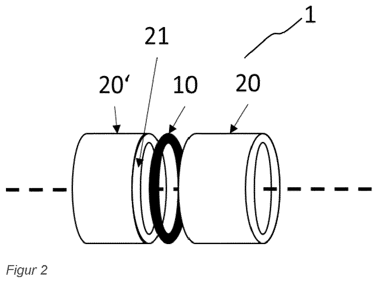

In Figur 2 ist eine schematische Darstellung (Explosionszeichnung) einer Vorrichtung (1) mit einer kraftschlüssigen Verbindung zwischen zwei Bauteilen (20, 20') gezeigt. Zwischen den beiden Bauteilen (20, 20') ist ein Verbindungselement (10), z.B. in Form einer reibkraftverstärkenden Unterlegscheibe, angeordnet. In der hier dargestellten Ausführung weisen sowohl die Bauteile (20, 20') als auch das Verbindungselement eine Öffnung entlang der gestrichelt dargestellten Achse auf. Entlang dieser Achse kann beispielsweise ein Bolzen oder ein Gewindeelement durch die Öffnung geschoben werden, um die Bauteile mit dem dazwischenliegenden Verbindungselement miteinander zu verbinden (nicht dargestellt).

## Patentansprüche

1. Verbindungselement zur Erhöhung der Reibkraft in kraftschlüssigen Verbindungen, umfassend ein Metallsubstrat mit zwei gegenüberliegenden ebenen Oberflächen, wobei eine oder beide Oberflächen eine Keramikschicht aufweisen.

2. Verbindungselement gemäß Anspruch 1, wobei die Keramikschicht chemisch an das Metallsubstrat angebunden ist, wobei die chemische Anbindung mittels EELS gemessen werden kann wie es hierin beschrieben ist.

3. Verbindungselement gemäß einem der Ansprüche 1 oder 2, wobei das Metallsubstrat eine Metallfolie oder ein Metallblech ist und eine Dicke aufweist, die im Bereich von 50 µm - 10 mm, insbesondere im Bereich von 100 µm - 1 mm liegt.

4. Verbindungselement gemäß einem der Ansprüche 1-3, wobei das Metallsubstrat mindestens eine der folgenden Eigenschaften aufweist:
a. Eine Zugfestigkeit im Bereich von mindestens 100 MPa,
b. Ein E-Modul im Bereich von 210.000 bis 246.000 MPa und
c. Eine Vickers-Härte (HV10) von 70 oder mehr.

5. Verbindungselement gemäß einem der Ansprüche 1-4, wobei das Metallsubstrat eine Eisenbasislegierung aufweist oder daraus besteht.

6. Verbindungselement gemäß einem der Ansprüche 1-5, wobei die Keramik eines oder mehrere der Elemente aufweist, die ausgewählt sind aus der Gruppe bestehend aus Bor, Aluminium, Silizium, Zirkonium, Titan, Molybdän, Wolfram, Vanadium und Hafnium.

7. Verbindungselement gemäß einem der Ansprüche 1-6, wobei die Keramikschicht eine Vickershärte (HV10) von mindestens 1400 aufweist.

8. Verbindungselement gemäß einem der Ansprüche 1-7, wobei die Keramikschicht mittels Aerosol-Deposition bei Raumtemperatur aufgetragen ist.

9. Verbindungselement gemäß einem der Ansprüche 1-8, wobei die Oberflächenrauigkeit R_{z} der Keramikschicht einen Wert von mindestens 2 µm, insbesondere von mindestens 5 µm aufweist und wobei diese Rauigkeit R_{z} einen Wert von höchstens 40 µm, insbesondere von höchstens 20 µm aufweist, wobei die Rauigkeit Rz mittels Tastschnittverfahren gemäß DIN EN ISO 4287:2010-07 gemessen werden kann.

10. Verfahren zur Herstellung eines Verbindungselements gemäß einem der Ansprüche 1-9, aufweisend die Schritte:
- Bereitstellen eines Metallsubstrats aufweisend zwei gegenüberliegende ebene Oberflächen
- optional, Einstellen der Rauigkeit R_{z} des Metallsubstrats auf einen Wert im Bereich von 2 µm und 40 µm, und
- Aufbringen mindestens einer Keramikschicht auf mindestens eine der Oberflächen des Metallsubstrats mittels Aerosol Deposition.

11. Verfahren gemäß Anspruch 10, wobei das Verbindungselement nach dem Aufbringen der Keramikschicht aus dem Metallsubstrat herausgetrennt wird.

12. Vorrichtung aufweisend eine kraftschlüssige Verbindung zwischen zwei Bauteilen, wobei zwischen den zwei miteinander verbundenen Bauteilen zumindest teilweise ein Verbindungselement gemäß der Ansprüche 1 - 9 angeordnet ist.

13. Vorrichtung gemäß Anspruch 12, wobei die Vorrichtung ausgewählt ist aus der Gruppe bestehend aus einer Kurbelwelle, einer Nockenwelle, einem Flansch, einem Schwungrad, einem Ausgleichswellenmodul und einem Antriebsstrang.

14. Vorrichtung gemäß Anspruch 12 oder 13, wobei mindestens eines der Bauteile an der Kontaktoberfläche mit dem Verbindungselement eine Oberflächenrauigkeit R_{z} einen Wert von mindestens 1 µm, insbesondere von mindestens 5 µm aufweist und wobei diese Rauigkeit R_{z} einen Wert von höchstens 60 µm, insbesondere von höchstens 20 µm aufweist.

15. Vorrichtung gemäß einem der Ansprüche 12 - 14, wobei sich die Oberflächenrauigkeiten mindestens einer Oberfläche eines Bauteils und die Oberflächenrauigkeit des Verbindungselements um höchstens 100 %, insbesondere um höchstens 50% oder besonders bevorzugt um höchstens 20% unterscheiden.

16. Vorrichtung gemäß einem der Ansprüche 12 - 15, wobei die Kontaktfläche mindestens eines Bauteils eine Keramikschicht aufweist.
